# EUROPEAN PATENT APPLICATION

(11) **EP 4 470 369 A1**
(43) Date of publication of application: **04.12.2024**
(21) Application number: 24177266.4
(22) Date of filing: 22.05.2024
(51) Int. Cl.: A01K 23/00, E01H 1/12

(54) **TOOL SUITABLE FOR RECEIVING DOG EXCREMENT**

(30) Priority: 25.05.2023 IT 202300002217 U
(71) Applicant: Grilli Cicilioni, Luciana, 62010 Mogliano (MC) (IT)
(72) Inventor: Grilli Cicilioni, Luciana, 62010 Mogliano (MC) (IT)
(74) Representative: Baldi, Claudio

(57) **Abstract**

Tool for manual use to receive dog excrement, in which this tool includes a rod acting as a grip handle that supports a shelf at the bottom acting as a vice capable of clamping the opening of a bag for picking up dog excrement.

## Description

The tool at issue was designed following the critical observation of a specific problem that appears due to the ever-increasing presence of domestic dogs in public and private areas.

This hints at the fact that these animals, generally brought on a leash by their owners, usually defecate in the aforementioned areas, forcing their owners to collect their excrement as soon as they are deposited with the specific purpose of protecting the integrity and decency of the environment.

Well, all dog owners know the critical aspects of such an activity, related above all to the need to bend down to the ground to pick up their dog's excrement and place it in a special bag.

In fact, such an operation sometimes turns out to be difficult, especially for elderly owners or for people suffering from motor or postural disorders.

Precisely this difficulty, often combined with people's lack of civic sense, sometimes means that dog owners deliberately give up on collecting their excrement, leaving it to remain on the ground with all the easily imaginable inconveniences.

Moreover, consider that, for some time now, tools have been designed to allow dog owners to collect their animals' excrement even without being forced to bend down to the ground.

These devices mainly consist of a small dustpan placed at the lower end of a long grip handle with which the users can actually pick up their dog's excrement from the ground, whilst maintaining a substantially upright posture.

Even in this case, however, it is required that this person must then carry out the further operation relating to the transfer of the excrement from the aforementioned dustpan to the storage and disposal bag.

The specific purpose of the present invention is to create a tool able to overcome the previous technique just referred to, starting from an absolutely innovative approach.

It is alluded to the fact that with the tool according to the invention it is not intended to optimize in some way the collection of dog excrement from the ground and its subsequent storage in a disposal bag, but it is even intended to prevent the dog excrement from being deposited to the ground and ensure that, as soon as it is expelled by the animal, it is collected in a typical disposal bag.

To pursue a similar purpose, the tool according to the invention consists of a rod, preferably adjustable in length, which supports a particular ring-shaped shelf which, in use, is suitable for assuming a substantially horizontal position and for clamping in an enlarged position a typical waste disposal bag for dog excrement.

The handy use of this tool requires that the owner of the dog, as soon as the dog has assumed the typical posture that precedes defecation (with the tail raised and the back paws bent), places the aforementioned bag supported by the tool underneath the animal's anus to ensure that the excrement falls directly into the bag supported by the tool, therefore without coming into contact with the ground in any way.

At this point the owner can easily remove the bag from his tool, close it and arrange it for its disposal.

The further purpose of the present invention is to give the tool according to the invention an entirely compactable structure which allows it, in conditions of non-use, to be advantageously closed and placed inside a bag, a belt bag or even in the pocket of a garment.

The aforementioned main purpose of the invention was achieved in accordance with the characteristics listed in the attached independent claim 1.

Advantageous realizations of this invention appear from the dependent claims.

For a greater explanatory clarity, the description of the invention continues with reference to the attached drawing tables, which have only illustrative and nonlimiting value in which:
- figures 1 to 5 show, with the same number of axonometric projections, the phases of the switching of the tool in question from its compact non-operational position to its extended operational position;
- figure 1A shows the two main components of the tool in question in their separate position;
- figures 6 and 7 show, with the same number of axonometric projections, the bag holder clamp of the tool in question, respectively in its open position and in its tightened position;
- figures 8, 9 and 10 show, with the same number of side views of the invention, the aforementioned clamp in the phases of inserting the bag and tightening the bag.

With reference to the aforementioned figures, the tool in question (UT) includes the following two main components, both preferably obtained by the moulding of plastic materials.

The first of these components consists of a rod (1) equipped with a top handle (10); the second of these components consists of a ring-shaped shelf (2), shaped like a vice, mounted at the base of said rod (1), in which said shelf (2) is suitable in use to assume a cantilevered position with respect to said rod (1) and to centrally accommodate a bag (B), grasping its entrance around the perimeter to keep it in an expanded position.

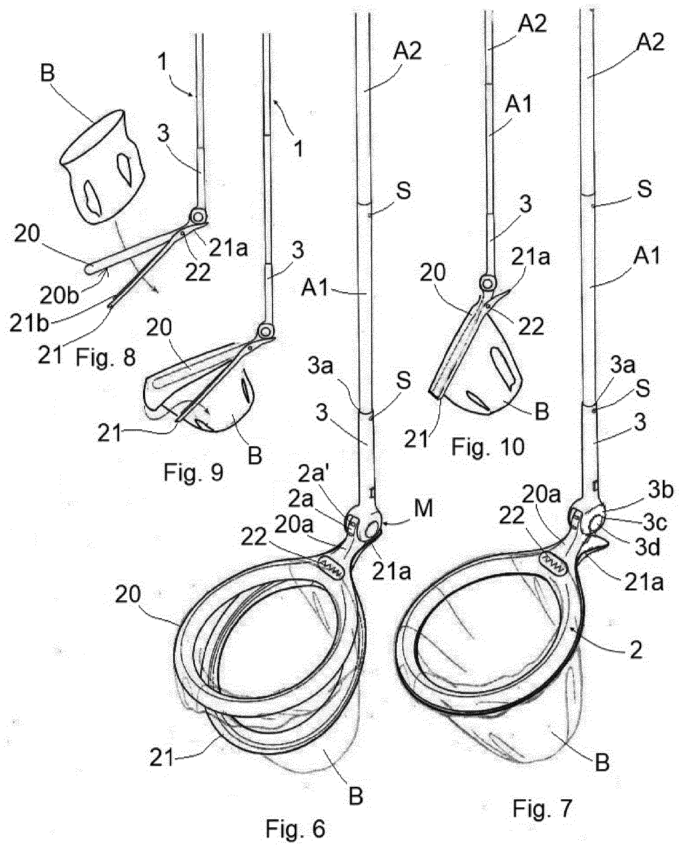

With particular reference to figure 7, it is reiterated that a similar tool (UT), when the aforementioned shelf (2) has hooked a respective bag (B) and has assumed the aforementioned cantilevered position on the front of the rod (1), is suitable for use in the sense of placing the aforementioned bag-holder shelf below the dog's anus, so that the excrements expelled by the animal pour by gravity into the aforementioned bag (B) after passing through the shelf (2) that supports it.

In the preferred embodiment shown in the attached figures, the aforementioned ring-shaped shelf (2) includes a first clamp (20) and a second clamp (21), which can be superimposed and interfaced exactly, as well as having the same substantially circular profile.

The first (20) of these clamps consists of a load-bearing clamp, while the second (21) consists of a tilting clamp, supported below by the first clamp (20).

These clamps (20, 21) are mutually pivoted by a torsion spring (22) which operates in imitation of the springs used on clothes pegs; it being provided that said spring (22) is positioned within the shelf (2) in alignment with the rod (1).

The first clamp (20) has, on the back of the aforementioned mounting point of the spring (22), a radial arm (20a), intended to ensure the connection between the said first clamp (20) and the rod (1).

For its part, the second underlying clamp (21) has, in a position exactly corresponding to that occupied by the above radial arm (20a) of the first clamp (20), an arcuate radial lever (21a) which adopts a divergent position with respect to the aforementioned radial arm (20a) of the first clamp (20), as expressly shown in figures 8, 9 and 10.

With specific reference to figure 8, it is also specified that the first clamp (20) has, throughout its perimeter development, a concave lower edge (20b), while the second clamp (21) has, throughout its perimeter development, a convex upper edge (21b), suitable in use to fit exactly, from bottom to top, inside the aforementioned concave perimeter edge (20b) of the first clamp (20).

In this way the two clamps (20, 21) are able to operate, in a similar permeated position, like a real vice capable of gripping and firmly clamping the entrance of a bag (B) for collecting the dog excrement.

After having described the structure of the new tool in question (UT), we now proceed to describe its operating methods in relation to the aforementioned ability to support in an open position a typical bag (B) for collecting dog excrement.

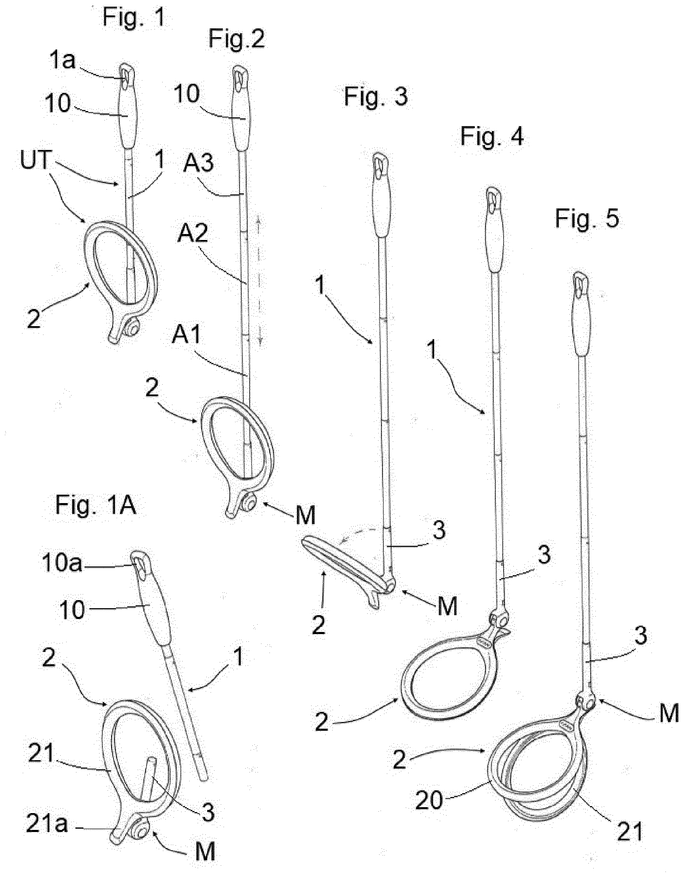

From this perspective, it is assumed that initially the tool according to the invention (UT) is in the position of figure 4, in a condition in which the two clamps (20, 21) of the ring-shaped shelf (2) are tightened and permeated with each other, without yet having received the bag (B) intended to be supported by the tool itself (UT).

Of course, the responsibility to permanently maintain the two clamps (20, 21) in a similar tight and permeated position is to be attributed to the aforementioned torsion spring (22) placed between them.

Starting from a similar presupposition, it can be understood how the user who wants to mount a bag (B) on this tool (UT) must first enable the opening of the two clamps (20, 21) of the shelf (2), as shown in the figures 5 and 6.

To obtain a similar effect, the user must push the aforementioned radial lever (21a) supplied with the second clamp (21) in the direction of the aforementioned radial arm (20a) of the above first clamp (20), overcoming the resistance opposed by the aforementioned spring (22).

The lifting of this tilting lever (21a) involves the lowering of the second clamp (21) with respect to the pivot point represented by the aforementioned spring (22) and, ultimately, the divarication of the second clamp (21) with respect to the first one (20).

At this point the user, always keeping the two clamps (20, 21) in this open position, must insert the bag (B) into the shelf (2) with the bottom wall facing downwards and, more precisely, insert it into succession through the first clamp (20) and the second clamp (21).

Once the user is sure that the bag (B) has entirely passed through the first clamp (20), he must tuck in, from the inside outwards, the entrance edge of the bag (B) around to the aforementioned convex edge (21b) of the second clamp (21), as shown in figure 6.

After having the certainty that this operation has been carried out correctly, the user only has to release the tilting lever (21a) of the second clamp (21), in such a way that the latter becomes subject to the action of the aforementioned spring (22) that tends spontaneously and instantly to bring it back into contact with the first above clamp (20).

In this way, a new perfect placement of the convex edge (21b) of the second clamp (21) is obtained within the above concave edge (20b) of the first clamp (20), in a condition in which the aforementioned entrance edge of the bag (B) remains tightly clamped between the two clamps (20, 21), ensuring to the entire bag (B) the ability to maintain its correct enlarged position during use.

As soon as the bag (B) has received the dog's excrement, the user can easily remove it from the bottom of the shelf (2) for correct disposal, on the sole condition of previously enabling a new opening of the two clamps (20, 21).

As regards the aforementioned shelf (2), it is also specified, with reference to figure 6, that it is preferably mounted, with the interposition of a hinge means (M), at the base of a tubular stem (3), whose upper end (3a) is suitable to stably accommodate the lower end of the aforementioned rod (1).

Thanks to a similar hinge means (M) the shelf (2) is able to alternatively assume a compact non-operating position, shown in figures 1 and 1A, in correspondence with which it assumes a position close and parallel to that of the aforementioned tubular stem (3), and a cantilevered operating position, shown in figures 4 and 5, in correspondence with which it is positioned substantially at 90° with respect to the stem itself (3).

It is clear that the possibility of putting the shelf (2) in the non-operating position shown in figure 1A proves to be advantageous also in terms of reducing the overall size of the tool according to the invention (UT) on all the occasions in which it is not used.

In the preferred embodiment, the aforementioned hinge means (M) includes a fork (3b) which jets out axially from the aforementioned tubular stem (3), in which the two lobes of said fork (3b) are crossed by a respective circular hole (3c).

The two lobes of said fork (3b) are suitable to accommodate between them a substantially cylindrical appendage (2a) provided in correspondence with the free end of the aforementioned radial arm (20a) of the aforementioned first clamp (20).

Said appendage (2a) is crossed by a cylindrical hole suitable in use to be in perfect alignment with the two aforementioned holes (3c) of the fork lobes (3b), so as to allow the installation of a rotation pin (3d) inserted simultaneously into the two holes (3c) of the fork lobes (3b) and into the hole of said cylindrical appendage (2a).

Such a hinge means (M) is preferably equipped with a friction means capable of giving stability to the compact or cantilevered position assumed from time to time by the shelf (2) with respect to the tubular stem (3) and therefore with respect to the rod (1) inserted into this tubular stem (3).

In the specific case, such a friction means provides that the aforementioned cylindrical appendage (2a) belonging to the shelf (2) adopts externally some cross teeth (2a') suitable for catching by force, during the rotation of said appendage (2a), with corresponding teeth (not shown in the attached figures) made inside the aforementioned fork (3b) included in the tubular stem (3).

In the preferred embodiment of the invention shown in the attached figures, the aforementioned rod (1) is expected to have a telescopic structure, as it is composed of several cylindrical segments (A1, A2, A3) capable of sliding alternately inside each other.

Such an expedient allows the user to advantageously adjust the length of the rod (1) depending on the conditions of use of the tool in question.

Such an adjustment in fact allows to commute said rod (1) from its compact non-operational position shown in figure 1, which minimizes its vertical size, to its extended operational position shown in figure 4, in which said rod (1) reaches the maximum length.

Furthermore, it has to be considered that in this way the user can from time to time select the length of the rod (1) as desired, also depending on the size of the dog and/or the height of the user.

In this perspective, it is expected that each one of the aforementioned segments (A1, A2, A3) of the rod (1) is equipped with means that allow it to stabilize its extended position with respect to the other segments included in the same rod (1).

In the preferred embodiment shown in the attached figures it is expected that the aforementioned means for the mutual stabilization of the segments (A1, A2, A3) of the rod (1) consists of respective pins (S) which jet out radially near the lower end of each of said segments (A1, A2, A3).

In particular, it is expected that said pins (S) are capable - by exploiting the elastic deformability of the segments (A1, A2, A3) - to snap into corresponding radial holes made at the upper ends of the segments immediately below, at the moment in which each one of these segments has reached its maximum extraction position with respect to the underlying segment.

With reference to the aforementioned handle (10) of the aforementioned rod (1), it is specified that it is preferably equipped with a top eyelet (10a) that the user can advantageously exploit to stably insert one or more stock sample of the aforementioned bag (B).

Finally, it is specified that even if, up to now, it has been assumed that the ring-shaped shelf (2) has a circular profile, nothing prevents that said shelf (2), while retaining its typical ability to grasp and firmly hold the open entrance of a bag (B), can take on a different shaped profile, perhaps elliptical or square.

## Claims

1. Tool suitable to receive dog excrement, comprising a rod (1) which supports at the base a ring-shaped shelf (2) shaped like a vice, suitable to support, at the bottom and in an enlarged position, a bag (B) for the collection of dog excrement.

2. Tool according to claim 1, in which the aforementioned shelf (2) includes two ring-shaped clamps (20, 21) which can be interfaced, in which the following are provided:
- a first ring-shaped load-bearing clamp (20) includes a radial arm (20a) to be cantilevered to the rod (1);
- a second ring-shaped clamp (21) is supported underneath by the first clamp (20) with the ability to oscillate with respect to said first clamp (20), to alternately assume a tight position and an open position with respect to the first clamp (20); in which the said second clamp (21) includes, in a position corresponding to that occupied by the aforementioned radial arm (20a) of the first clamp (20), a lever (21a) with a divergent position with respect to the said radial arm (20a);
- a spring (22) placed between the two aforementioned clamps (20, 21) with the capacity to keep the same two clamps (20, 21) permanently tight; in which said spring (22) lies at the pivot point with respect to which the second clamp (21) can open out from the first clamp (20) following a stress exerted on the aforementioned lever (21a), so as to overcome the resistance opposed by the spring (22).

3. Tool according to claim 2, in which the aforementioned first clamp (20) has a concave perimeter edge (20b) at the bottom and in which the aforementioned second clamp (21) has a convex perimeter edge (21b) at the top suitable for seating exactly within the aforementioned concave perimeter edge (20b) of the first clamp (20), at the moment in which the two aforementioned clamps (20, 21) assume their tightened position.

4. Tool according to any one of the previous claims, in which said tool (UT) comprises a hinge means (M) between the lower end of the rod (1) and the shelf (2), such that said shelf (2) can alternatively assume a cantilevered position with respect to said rod (1) or a close and parallel position to the rod (1).

5. Tool according to claim 4, in which the aforementioned hinge means (M) operates at the lower end of a tubular stem (3), in which the upper end (3a) is suitable for receiving in depth the lower end of the aforementioned rod (1); in which said hinge means (M) comprises:
- a fork (3b) which jets out axially from the aforementioned tubular stem (3), in which the two lobes of said fork (3b) are crossed by respective circular holes (3c);
- a cylindrical appendage (2a) supported by the aforementioned radial arm (20a) of the first clamp (2) and crossed by a cylindrical hole, in which said appendage (2a) is suitable to be rotatably installed between the two lobes of the aforementioned fork (3b) in such a position that the aforementioned hole of said appendage (2a) is in perfect alignment with the two aforementioned holes (3c) of the lobes of the fork (3c);
- a rotation pin (3d) inserted simultaneously into the two holes (3c) of the lobes of said fork (3b) and into the hole of said cylindrical appendage (2a).

6. Tool according to claim 5, in which the aforementioned cylindrical appendage (2a) of the shelf (2) has a series of cross teeth (2a') suitable for catching with corresponding teeth provided on the inside of the aforementioned fork (3b) of the stem (3).

7. Tool according to any of the previous claims, in which the aforementioned rod (1) is equipped with a telescopic structure.

8. Tool according to one of the previous claims, in which the aforementioned rod (1) includes a handle (10).

9. Tool according to claim 8, wherein said handle (10) has an eyelet (10a).
